# EUROPÄISCHE PATENTSCHRIFT

(11) **EP 3 641 972 B1**
(45) Veröffentlichungstag und Bekanntmachung des Hinweises auf die Patenterteilung: **24.08.2022**
(21) Anmeldenummer: 18730339.1
(22) Anmeldetag: 08.06.2018
(51) Int. Cl.: B23F 23/02

(54) **BEWEGUNGSSYSTEM UND VERZAHNUNGSMASCHINE**
MOVING SYSTEM AND GEAR-CUTTING MACHINE
SYSTEME DE DÉPLACEMENT ET MACHINE À TAILLER LES ENGRENAGES

(30) Priorität: 19.06.2017 DE 102017005756
(43) Veröffentlichungstag der Anmeldung: 29.04.2020
(73) Patentinhaber: Gleason-Pfauter Maschinenfabrik GmbH, 71636 Ludwigsburg (DE)
(72) Erfinder: PHILIPPIN, Matthias, 71277 Rutesheim (DE); RUSCH, Uwe, 71636 Ludwigsburg (DE); STAIGER, Daniel, 72793 Pfullingen (DE); MÜLLER, Peter, 74321 Bietigheim-Bissingen (DE); GRESSLER, Sabrina, 74379 Ingersheim (DE); GROSS, Andreas, 71672 Marbach (DE); KOHLER, Dietmar, 75428 Illingen (DE)
(74) Vertreter: Leinweber & Zimmermann
(86) Internationale Anmeldenummer: PCT/EP2018/065121
(87) Internationale Veröffentlichungsnummer: WO 2018/234062

(56) Entgegenhaltungen:
- DE-A1- 3 618 536
- DE-A1-102007 019 558
- US-A- 3 659 496
- US-A1- 2005 235 788
- US-A1- 2013 223 945

## Beschreibung

Die Erfindung betrifft ein Bewegungssystem zum Verbringen von für eine Verzahnungsbearbeitung auf einer Werkstückspindel vorgesehenen und eine Werkstückdrehachse aufweisenden Werkstücken von einer bei ihrer Zuführung eingenommenen ersten Position in eine von der ersten Position durch jedenfalls einen geringeren Abstand zwischen Werkstückdrehachse und Werkstückspindelachse abweichende zweite Position, mit einer ersten Bewegungseinheit, welche ein Verbringen eines Werkstücks von der ersten Position in eine von der ersten und der zweiten Position abweichende dritte Position entlang einer ersten Bewegungsbahn bewirkt, und einer zweiten Bewegungseinheit, welche ein Verbringen des Werkstücks von der dritten Position in die zweite Position entlang einer zweiten Bewegungsbahn bewirkt, wobei das Bewegungssystem weiter dazu ausgelegt ist, bearbeitete Werkstücke wieder aus der zweiten Position heraus zu verbringen und mehr als ein Werkstück gleichzeitig zu halten und zu bewegen, sowie eine mit einem solchen Bewegungssystem ausgestattete Verzahnungsmaschine. Ein Bewegungssystem gemäß dem Oberbegriff des unabhängigen Anspruchs 1 ist aus dem Dokument US 2013/223945 A1 bekannt.

Derartige Bewegungssysteme sind als Bestandteile von Be- und Entladungssystemen von Verzähnungsmaschinen bekannt, um dazu beizutragen, zu bearbeitende Werkstücke auf die Werkstückspindel der Verzahnungsmaschine zu verbringen, sowie bearbeitete Werkstücke wieder von der Werkstückspindel weg zu verbringen. Handelt es sich bei der Verzahhungsmaschine beispielsweise um eine Wälzfräs- oder Wälzstoß- oder Wälzschälmaschine, werden die Werkstücke in Form von unverzahnten Rohlingen zugeführt, im Falle einer Verzahnungsnachbearbeitung wie etwa Verzahnungsschleifen dagegen in Form von bereits vorverzahnten Werkstücken.

Oftmals umfassen derartige Bewegungssysteme sogenannte Ringlader, die ein Werkstück aus einer Position, in der die Werkstückdrehachse nicht mit der Werkstückspindelachse übereinstimmt, durch eine Schwenkbewegung in eine Position verbringen, in der die Werkstückdrehachse mit der Werkstückspindelachse übereinstimmt. Ein solcher Ringlader verbringt üblicherweise zeitglsich ein bereits bearbeitetes Werkstück aus der letztgenannten Position in die erstgenannte Position, wobei sich die Bewegungsvektoren der beiden Bewegungen zu einem Kreis ergänzen.

Mit solchen Ringladern wirken oftmals Zu- und Abführsysteme z.B. in Form von Zuführbändern zusammen, auf denen mehrere jeweils auf einer Werkstückpalette angeordnete Werkstücke im Umlauf sind. Bei beispielsweise einer vertikalen Werkstückspindelachseliegt das Zuführband üblicherweise unterhalb des Höhenniveaus, auf dem sich der Ringlader dreht, so dass zu- und abführseitig des Ringladers eine Hubstation zum Einsatz kommt, welche die Werkstückpafette soweit anhebt, dass das Werkstück das Höhenniveau des Ringladerserreicht.

Des Weiteren sind Laderobpter mit einem Greifarm bekannt, der über ausreichend viele Bewegungsfreiheitsgrade verfügt, um ein angeliefertes Werkstück auf eine Werkstückspindel zu verbringen. Die Roboter müssen jedoch ein gerade bearbeitetes Werkstück zuerst wieder entladen, bevor ein neues Werkstück beladen werden kann. Derartige Laderoboter verfügen zwar über eine hohe individuelle Einsetzbarkeit, erhöhen jedoch die Nebenzeiten um die für die Entladebewegung erforderliche Zeit.

US 2005/235788 A1 offenbart eine Multispindel-Drehmaschine mit einem internen Bewegungssystem, um die Werkstücke zwischen einer Bearbeitung an einer Seite und an der anderen Seite zu verlagern.

DE 3 618 536 A1 offenbart eine Abwälzfräsmaschine mit einer Einrichtung zum automatischen Wechseln des Spannfutters.

US 3,659,496 A offenbart eine Wälzstoßmaschine mit einem höhenverstellbaren und verschwenkbaren Werkstückhalter.

US 2013/223945 A1 offenbart eine Verzahnungsmaschine mit einem Ringlader, dessen Werkstückhalterungen zusätzlich axial verfahrbar sind.

Der Erfindung liegt die Aufgabe zugrunde, ein Bewegungssystem der eingangs genannten Art bei Beibehaltung zufriedenstellend kurzer Bewegungszeiten in einer einfachen Weise zu gestalten.

Diese Aufgabe wird von der Erfindung durch eine Weiterbildung des Bewegungssystems der eingangs genannten Art mit den Merkmalen von Anspruch 1 erreicht.

Die erfinderische Lösung ermöglicht ein rasches und einfaches Bewegen der Werkstücke, indem über die Hafteeinheit eine Integration der Werkstückbewegungen auf der ersten und zweiten Bewegungsbahn geschaffen wird, durch die bewegungseinheitsseitige Entkopplung jedoch trotz Vermeidung zusätzlicher Stationen ein einfacher Aufbau mit zufriedenstellend geringer Trägheit für die Bewegung der zweiten Bewegungsbahn erreicht wird.

In einer bevorzugten Ausführungsform hat/haben die erste Bewegungseinheit und/oder die zweite Bewegungseinheit nur einen Bewegungsfreiheitsgrad. Dies erhöht die Einfachheit des Systems.

In einer besonders bevorzugten Ausführungsform ist die zweite Bewegungseinheit eine rotatorische Bewegungseinheit. Dies erlaubt einfache Realisierungen von Werkstückbewegungen von der zweiten Position in die dritte Position zusätzlich zur Bewegung entlang der zweiten Bewegungsbahn.

In einer zweckmäßigen Ausführungsform ist die erste Bewegungseinheit eine lineare Bewegungseinheit, insbesondere für eine Vertikalbewegung. Auf diese Weise lassen sich besonders einfach Niveau-Unterschiede ausgleichen, insbesondere werden zusätzliche separate Hubstationen entbehrlich.

In einer besonders bevorzugten Ausführungsform ist die zweite Bewegungsbahn gekrümmt und nimmt bevorzugt die Form eines Kreisbogenabschnitts, insbesondere eines Halbkreises an. Dies erlaubt eine Mehrfachbewegung mehrerer Werkstücke entlang einer geschlossenen Bahn, welche die zweite Bewegungsbahn enthält.

In einer weiter bevorzugten Ausführungsform findet die Werkstückbearbeitung nicht in der zweiten Position, sondern in einer von der zweiten Position abweichenden vierten Position statt. Dazu kann eine dritte Bewegungseinheit vorgesehen sein, welche ein Verbringen des weiterhin von der Halteeinheit unmittelbar gehaltenen Werkstücks von der zweiten Position entlang einer dritten Bewegungsbahn in die vierte Position bewirkt, Zweckmäßig zieht eine von der zweiten Bewegungseinheit verursachte Bewegung auch keine Bewegung der dritten Bewegungsetnheit nach sich. In einem bevorzugten einfachen Fall verläuft die Achse der dritten Bewegungsbahn parallel zur Achse der ersten Bewegungsbahn, welche bevorzugt orthogonal zu einer Ebene verläuft, in der die zweite Bewegungsbahn liegt. In einem besonders bevorzugten Fall, bei dem eine vertikale Werkstückspindelachse mit stehender Werkstückspindel vorgesehen ist, entspricht die Bewegung entlang der dritten Bewegungsbahn einem Absetzen des Werkstücks auf die an die Werkstückspindel gekoppelte Spannvorrichtung zur Aufnahme des Werkstücks.

In der erfindungsgemäßen Ausgestaltung des Bewegungssystems weist dieses eine die Halteeinheit während der Bewegung auf der ersten Bewegungsbahn führenden Führungsanordnung auf, welche sich bei der Bewegung entlang der zweiten Bewegungsbahn mitbewegt. Dies sorgt für eine sichere Einhaltung der vom System für die jeweiligen Bewegungen zugestandenen Raumbereiche. Bevorzugt ist die Führungsanordnung gleichzeitig eine Führungsanordnung während der Bewegung entlang der dritten Bewegungsbahn.

In einer zweckmäßigen Ausführungsform weist das Bewegungssystem eine Laufschiene auf, auf welcher die Halteeinheit während der Bewegung entlang der zweiten Bewegungsbahn rollt oder gleitet. Zudem hat die Laufschiene und die Abkopplung der Halteeinheit an die Halteschiene bevorzugt eine Haltefunktion gegen die Wirkung der Schwerkraft.

In einer besonders bevorzugten Ausführungsform ist die rotatorische Bewegungseinheit in einer 360°/n Taktung getaktet, wobei n bevorzugt 2,3 oder 4 ist, insbesondere 2 ist. In diesem Zusammenhang weist das Bewegungssystem bevorzugt n ≥ 2 insbesondere gleichartig ausgebildete Halteeinheiten auf, Insbesondere können alle n Halteeinheiten temporär gleichzeitig so angeordnet sein, dass die von ihnen gehaltenen Werkstücke sich entlang einer geschlossenen Bahn bewegen können, welche die zweite Bewegungsbahn enthält Ein die zweite Bewegungsbahn zu der geschlossenen Bahn ververständigender Bahnanteil ist somit für eine parallele Rückführung von Werkstücken aus der zweiten Position in die dritte Position vorgesehen.

Durch Wirkung der ersten und/oder dritten Bewegungseinheit, beispielsweise der ersten Bewegungseinheit, wird eine ein Werkstück in der dritten Position haltende Halteeinheit aus dieser Bahn heraus oder in diese Bahn hineinbewegt. In einer zweckmäßigen Ausführungsform weist die Laufschiene hierzu eine Unterbrechung auf.

In einer besonders bevorzugten Ausgestaltung ist das Bewegungssystem durch seine Steuerung derart gesteuert, dass ein von einer Halteeinheit gehaltenes Werkstück die dritte Position und ein von einer anderen Halteeinheit gehaltenes Werkstück die zweite Position aufgrund der Wirkung der zweiten Bewegungseinheit gekoppelt und zeitgleich verlässt. Bei ihren Bewegungen entlang der geschlossenen Bewegungsbahn ist somit eine Einzelansteuerung der Halteeinheiten nicht erforderlich.

In einer weiteren bevorzugten Ausführungsform weist/weisen die Halteinheit(en) während der Bewegung auf der ersten und/oder dritten Bewegungsbahn bis auf eine nur abstützende Kopplung keine ein Lösen erforderliche Kopplung an die erste und/oder dritte Bewegungseinheit auf. Grundsätzlich ist zwar auch an Varianten gedacht, in denen eine Kopplung beispielsweise der ersten Bewegungseinheit an die Halteeinheit durch ein Klemmen oder einen Rastmechanismus vorgesehen ist, welche/welcher gelöst wird, bevor die Bewegung entlang der zweiten Bewegungsbahn beginnt. Die oben angegebene Variante ist jedoch einfacher zu realisieren und benötigt keine zusätzlichen Aktuatoren oder mechanische Ausrastvorrichtungen.

In einer weiteren bevorzugten Ausführungsform weist das Bewegungssystem einen Drehkäfig auf, dessen parallel zur Drehachse der zweiten Bewegungseinheit wirkende Stützstruktur durch Laufstangen der Führungsanordnung gebildet ist. Dies erlaubt weitergehend, die der Bewegung entlang der zweiten Bewegungsbahn entgegenstehende Trägheit gering zu halten. Eine in umfänglicher Richtung wirkende Stützstruktur kann eine Verzahnung aufweisen, welche eine Doppelfunktion in Form einer Kopplung an die zweite Bewegungseinheit haben kann.

In einer weiteren bevorzugten Ausführungsform weist das Bewegungssystem in konstruktiver Hinsicht einen säulenartigen Träger auf, an dem die Bewegungseinheiten angeordnet sind und um den insbesondere der Drehkäfig drehbar angeordnet ist. Dadurch ergibt sich ein kompaktes Gesamtsystem und erforderlicher Bauraum für zusätzliche Stationen wie etwa Hubstationen entfällt. Insbesondere kann die Säule auch eine Reitstockanordnung tragen.

In einer zweckmäßigen Ausführungsform ist je Bewegungseinheit ein Antrieb vorgesehen. Beispielsweise könnte für die zweite Bewegungseinheit ein den Drehkäfig über eine Zahnradkopplung antreibender Drehantrieb vorgesehen sein. Die erste und/oder dritte Bewegungseinheit können beispielsweise über Kolben-Zylinder-Einrichtungen hydraulisch oder pneumatisch angetrieben werden.

Die Länge der ersten und/oder dritten Bewegungsbahn ist über eine jeweilige Antriebssteuerung einstellbar. Üblicherweise ist die Länge der dritten Bewegungsbahn geringer als die der ersten Bewegungsbahn. Bevorzugt ist die maximal einstellbare Länge der dritten Bewegungsbahn jedoch größer als gängige axiale Abmessungen typischer Spannvorrichtungen.

Bei der Halteeinheit handelt es sich bevorzugt um einen greifende Halteeinheit.

In einer bevorzugten Ausführungsform weisen die, insbesondere alle Halteeinheit(en) zwei Haltearme auf, deren Abstand voneinander änderbar ist. Die Haftearme können die Werkstücke klemmend halten. Insbesondere können dazu die Haltearme für ein Greifen vorgespannt sein. Die Vorspannung kann dabei für einen ausgewählten Halteabstand zwischen den Haltearmen einstellbar sein.

In diesem Zusammenhang ist zweckmäßig vorgesehen, dass die Haltearme lösbar an ihnen angebrachte Haltebacken aufweisen, deren dem Werkstück zugewandte Seite insbesondere an die Werkstückkontur angepasst ist. Bei einer Änderung einer Werkstückcharge wären dann lediglich die Haltebacken auszutauschen, falls erforderlich, und ggf. das Haltearmsystem auf einen neuen gewünschten Halteabstand einzustellen.

Das Bewegungssystem ist für scheibenförmige Räder geeignet wie auch für wellenartige Werkstücke.

In einer weiteren Ausführungsform kann das Bewegungssystem auch noch eine Zuund Abführeinrichtung aufweisen, die insbesondere als Endloszuführer oder Endlosband gestaltet ist, und die die Werkstücke in die erste Position bringt (und bevorzugt die bearbeiteten Werkstücke aus der ersten Position abtransportiert). Dabei ist bevorzugt vorgesehen, dass die Zu- und Abführeinrichtung die Werkstücke in einer Höhe über Boden zuführt, die gemessen an ihrem dem Boden zugewandten Ende wenigstens 75 cm, bevorzugt wenigstens 90 cm beträgt und bevorzugt geringer ist als 135 cm, insbesondere als 120 cm.

Eine Werkstückzufuhr mittels der Zu- und Abführeinrichtung kann über Werkzeugpaletten erfolgen, die die Werkstücke tragen. Bei scheibenförmigen Werkstücken sind diese in ihrer Bohrung beispielsweise mit Spiel auf einem Zentrierdorn an der Palette aufgefädelt und auf der Auflagefläche der Palette aufgelegt. Bei wellenförmigen Werkstücken ist vorgesehen, diese mit Spiel in einer Aufnahmebohrung einer Palette einzustecken und ggf. ebenfalls auf eine Auflagefläche der Palette aufzulegen. Die Halteeinheit greift nicht die Palette, sondern unmittelbar das Werkstück.

Weitere Merkmale, Einzelheiten und Vorteile der Erfindung ergeben sich aus der nachfolgenden Beschreibung mit Bezug auf die beigefügten Figuren, von denen
Fig. 1 in einer perspektivischen Ansicht ein Bewegungssystem zeigt,
Fig. 2 das Bewegungssystem in einer Perspektivansicht aus einem anderen Blickwinkel zeigt,
Fig. 3 eine vergrößerte Ansicht eines Teilbereichs aus Fig. 1 zeigt,
Fig. 4 einen Bewegungsmechanismus für eine erste Bewegungsbahn in einer Axialschnittansicht zeigt, und
Fig. 5 Werkstückpositionen in einer erläuternden abstrakten Darstellung zeigt.

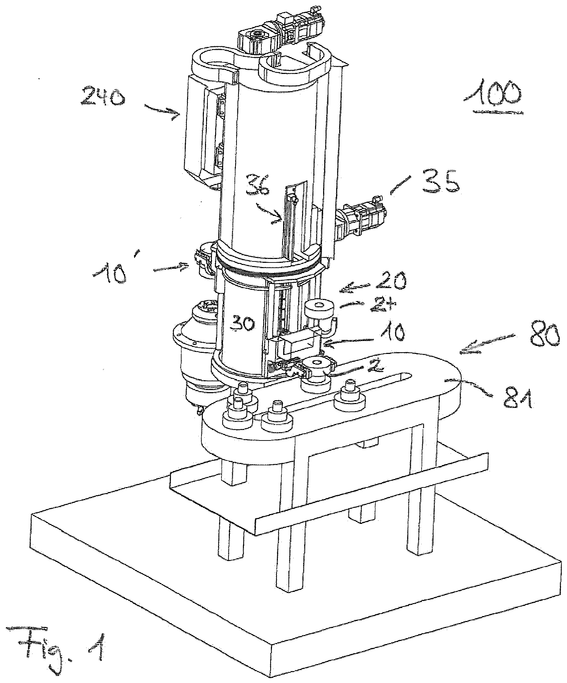

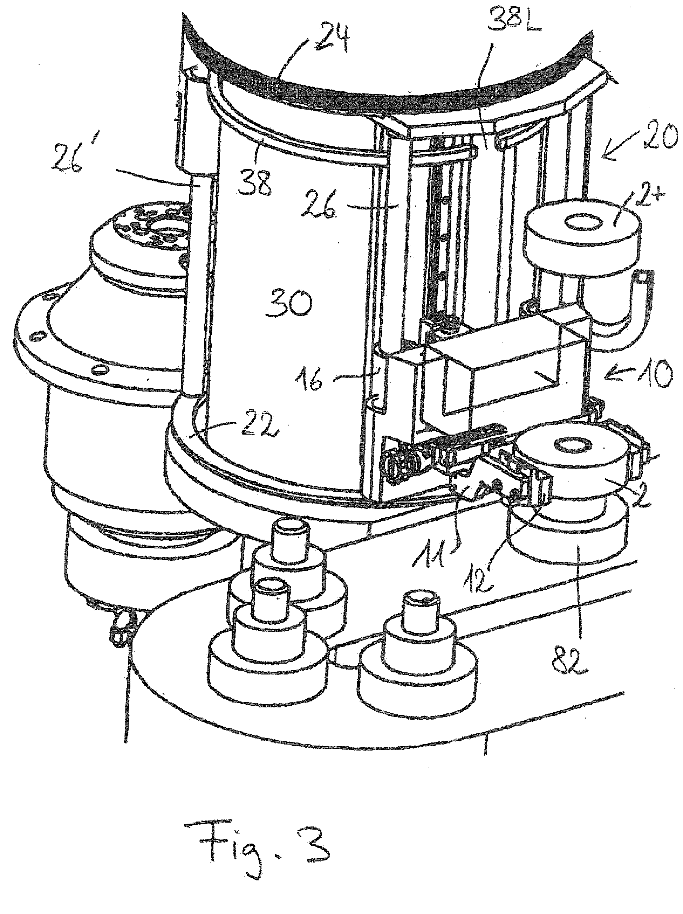

Wie in Fig. 1 zu erkennen ist, weist ein Bewegungssystem 100 eine Säule 30 auf, in derem unteren Bereich ein Drehkäfig 20 drehbar um die Säule 30 angeordnet ist. Der Drehkäfig weist als eine obere umfängliche Stützstruktur einen Zahnkranz 24 auf und als untere umfängliche Stützstruktur einen Ring 22 (Fig. 3). Des Weiteren weist der Drehkäfig 20 als axiale Stützstruktur Stangen auf, welche zudem Führungsstangen 26 für Halteeinheiten 10, 10' bilden. Ein an der Säule 30 angebrachter Antrieb 35 kann den Drehkäfig 20 in Rotation versetzen, über eine Zahnradkopplung mit Zahnkranz 24. Dabei ist für die Drehbewegung des Drehkäfigs 20 eine 180° Taktung vorgesehen, so dass nach einer Bewegung die der Halteeinheit 10 zugeordneten Führungsstangen 26 die Plätze mit den der Halteeinheit 10' zugeordneten Führungsstangen 26' tauschen.

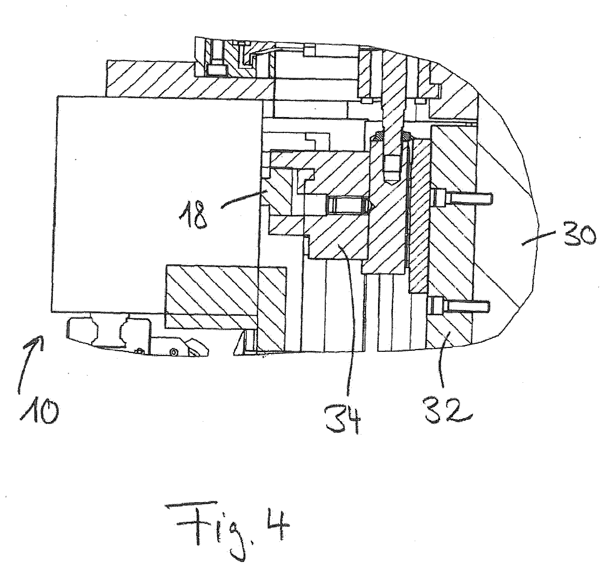

Im unteren Bereich der Säule 30 ist eine in Säuienrichtung axiale Laufschiene 32 angeordnet (siehe Fig. 4), entlang der sich ein Mitnehmer 34 bewegen kann, der an einen Antrieb 36 gekoppelt ist. Der Antrieb 36 kann beispielsweise ein pneumatischer oder hydraulischer Antrieb in Form einer Kolben-Zylinder-Einrichtung sein. Der Mitnehmer 34 weist an seiner der Laufschiene 32 abgewandten Seite einen im Schnitt U-förmigen Aufnahmebereich auf. In diesen kann eine Rolle 18 aufgenommen werden, die an der der Säule 30 zugewandten Seite der Halteeinheit 10 in einer eine Drehung der Rolle um ihre Achse erlaubenden Weise befestigt ist. Die Drehachse der Rolle 18 verläuft in Fig. 4 horizontal von links nach rechts (dies entspricht in Polarkoordinaten bezüglich der Säule 30 einer radialen Richtung). Ist die Rolle 18 in dem Mitnehmer 34 aufgenommen, wird die Halteeinheit bei Bewegung des Mitnehmers 34 dessen Bewegung folgen und ihre Bewegung wird durch ihre die Führungsstangen 26 umgreifenden geführten Bereiche 16 geführt.

Unter Betrachtung von Fig. 1 würde eine solche vertikale Bewegung die ein Werkstück 2 in der in Fig. 1 dargestellten Position haltende Halteeinheit 10 vertikal nach oben bewegen, so dass das gehaltene Werkstück 2 in eine höher gelegene Position verbracht wird. Das Werkstück 2 in dieser höher gelegenen Position ist in Fig. 1 mit 2+ bezeichnet. Dabei entspricht die Position des Werkstücks 2, wie es in Fig. 1 gehalten dargestellt ist, der ersten Position und die Position des mit 2+ bezeichneten Werkstücks der dritten Position.

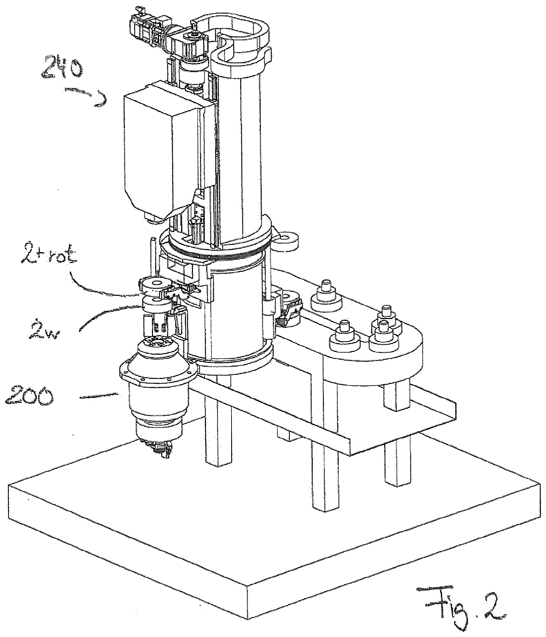

An der Säule 30 ist auf einer Höhe unterhalb des Zahnkranzes 24 eine Laufschiene 38 festgelegt, die in Form eines Kreisbogens gebildet ist. Im Bereich der Laufschiene 32 ist die Laufschiene 38 jedoch nicht durchgehend, vielmehr ist eine Lücke 38L vorgesehen, durch welche die Rolle 18 bei ihrer Vertikalbewegung hindurchgelangen kann, wenn sie von dem Mitnehmer 34 mitgenommen wird. Nach Vertikalbewegung der Halteeinheit 10, bei der das Werkstück 2 entlang der ersten Bewegungsbahn bewegt wird, die es von der ersten Position in die dritte Position verbringt, kann die Halteeinheit 10 wie in dem Ausführungsbeispiel gezeigt (180° Taktung) durch Drehbewegung des Drehkäfigs 20 um 180° in die Position gedreht werden, die in der Darstellung von Fig. 1 von der Halteeinheit 10' eingenommen ist. Das Werkstück 2 bewegt sich dadurch entlang einer zweiten Bewegungsbahn von der dritten Position in die zweite Position. In dieser zweiten Position ist das Werkstück 2 in Fig. 2 sichtbar und in dieser Position mit 2+rot bezeichnet (Fig. 2).

Auf dieser Bearbeitungsseite der Säule 30 ist eine weitere Vertikalbewegungseinheit vorgesehen, die im Wesentlichen gleichartig der zuvor beschriebenen Vertikalbewegungseinheit auf der bearbeitungsabgewandten Seite der Säule 30 gebildet ist. Mit dieser (dritten) Bewegungseinheit kann das Werkstück 2 auf eine in Fig. 2 nicht dargestellte Aufspannvorrichtung aufgesetzt werden, die an einer Werkstückspindel 200 einer Verzahnungsmaschine drehfest angebracht ist. In dieser Position, in der das Werkstück 2 bearbeitet wird, ist das Werkstück 2 mit 2w bezeichnet (vierte Position).

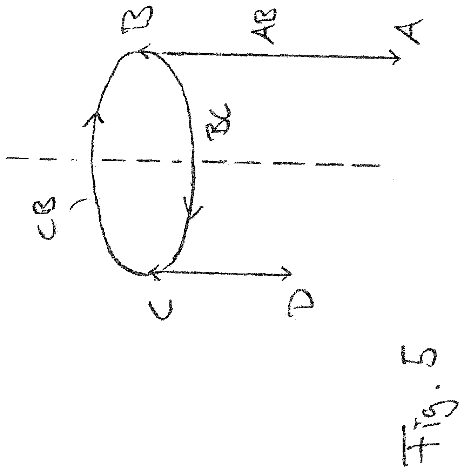

Die bei der Bewegung des Bewegungssystems 100 durchlaufenen Positionen für ein Werkstück 2 sind in Fig. 5 nochmals ohne Maschinenkomponenten dargestellt. Aus Position A wird das Werkstück 2 bewirkt durch die erste Bewegungseinheit in Position B angehoben und daraufhin bewirkt durch die zweite Bewegungseinheit in Position C verschwenkt und dann bewirkt durch die dritte Bewegungseinheit in Position D abgesenkt (Beladevorgang). Für das Entladen wird das bearbeitete Werkstück 2 aus Position D in Position C angehoben, dann wieder in die Position B verschwenkt und wieder in Position A heruntergefahren. Während das bearbeitete Werkstück 2 aus Position C in Position B bewegt wird, wird bereits zeitgleich ein nächstes zu bearbeitendes Werkstück (gehalten von der anderen Halteeinheit 10') aus Position B in Position C geschwenkt.

Aus Fig. 5 ist leicht erkennbar, dass unter Verwendung mehrerer (nicht dargestellter) Halteeinheiten 10", 10‴... auch andere Taktungen als 180° Drehungen gefahren werden können, beispielsweise 120° Taktungen oder 90° Taktungen. Ein Werkstück 2 gelangt auch dann nach Durchlaufen einer geschlossenen Kreisbahn (eine volle Taktrunde) nach zwischenzeitlicher Bearbeitung wieder in die Position B zurück. Im Falle einer 120° Taktung sind die Werkstückzu- und -abführseite der Säule 30 und die Bearbeitungsseite der Säule 30 nicht an entgegengesetzten Seiten, sondern um 120° angewinkelt angeordnet. Es entsteht eine weitere Position, in der ein Werkstück auf der geschlossenen Bewegungsbahn gehalten wird, und in welcher z.B. eine Sekundärbearbeitung am Werkstück vorgenommen werden könnte. Bei einer 90° Taktung entstehen zwei weitere Positionen, hier können Zuführseite und Bearbeitungsseite um 90° angewinkelt, aber auch wie in Fig. 1 um 1 80° versetzt vorgesehen sein.

Ebenfalls in Fig. 1 dargestellt ist noch eine Zu- und Abführeinheit 80, hier schematisch mit einem Endlosband 81 dargestellt, auf dem Werkzeugpaletten 82 umlaufen, welche die Werkstücke 2 auf ihrem Umlauf tragen. Man erkennt, dass die Halteeinheit 10 das Werkstück 2 unmittelbar greift. Die dafür vorgesehenen zwei Haltearme 11 weisen in ihrem Greifbereich innen Haltebacken 12 auf, welche passend zur Außenkontur der Werkstücke 2 gebildet sind.

Die Werkstücke können wie in Fig. 1 scheibenförmige Zahnräder oder Zahnradrohlinge sein, es ist jedoch auch an eine Bewegung zum Be- und Entladen von wellenartigen Werkstücken gedacht. In diesem Fall kann die Säule 30 zudem noch als Trägersäule für eine Reitstockanordnung 240 der Verzahnungsmaschine dienen, die bzw. deren Werkstückspindel 200 mit dem Bewegungssystem 100 mit Werkstücken 2 beladen wird und von bearbeiteten Werkstücken 2 entladen wird.

Die gezeigte Kopplung mit der Reitstockanordnung 240 ist jedoch nur eine mögliche Ausgestaltung und Ankopplung des Bewegungssystems 100, welches auch eigenständig vorgesehen sein kann.

Auch im Übrigen sind die vorstehend erläuterten Ausführungsbeispiele der Erfindung nicht als die Erfindung einschränkend anzusehen.

## Patentansprüche

1. Bewegungssystem (100) zum Verbringen von für eine Verzahnungsbearbeitung auf einer Werkstückspindel (200) vorgesehenen und eine Werkstückdrehachse aufweisenden Werkstücken von einer bei ihrer Zuführung eingenommenen ersten Position (A) in eine von der ersten Position durch jedenfalls einen geringeren Abstand zwischen Werkstückdrehachse und Werkstückspindelachse abweichende zweite Position (C), mit einer ersten Bewegungseinheit (36, 32, 34), welche ein Verbringen eines Werkstücks von der ersten Position (A) in eine von der ersten und der zweiten Position abweichende dritte Position (B) entlang einer ersten Bewegungsbahn (AB) bewirkt, und einer zweiten Bewegungseinheit (35), welche ein Verbringen des Werkstücks von der dritten Position (B) in die zweite Position (C) entlang einer zweiten Bewegungsbahn (BC) bewirkt, wobei das Bewegungssystem weiter dazu ausgelegt ist, bearbeitete Werkstücke wieder aus der zweiten Position (C) heraus zu verbringen und mehr als ein Werkstück gleichzeitig zu halten und zu bewegen,
**dadurch gekennzeichnet, dass**
das Werkstück während seiner Bewegung auf der ersten und auf der zweiten Bewegungsbahn von ein und derselben das Werkstück unmittelbar haltenden Halteeinheit (10; 10') gehalten ist, ohne dass eine von der zweiten Bewegungseinheit verursachte Bewegung eine Bewegung der ersten Bewegungseinheit nach sich zieht, und dass das Bewegungssystem die Halteeinheit während der Bewegung entlang der ersten Bewegungsbahn führenden Führungsanordnung (26, 16) aufweist, welche sich bei der Bewegung entlang der zweiten Bewegungsbahn mitbewegt.

2. Bewegungssystem nach Anspruch 1, bei dem die erste Bewegungseinheit und/oder die zweite Bewegungseinheit nur einen Bewegungsfreiheitsgrad hat/haben.

3. Bewegungssystem nach Anspruch 1 oder 2, bei dem die zweite Bewegungseinheit eine rotatorische Bewegungseinheit ist.

4. Bewegungssystem nach einem der vorhergehenden Ansprüche, bei dem die erste Bewegungseinheit eine lineare Bewegungseinheit ist, insbesondere für eine Vertikalbewegung.

5. Bewegungssystem nach einem der vorhergehenden Ansprüche, bei dem die zweite Bewegungsbahn gekrümmt ist und bevorzugt die Form eines Kreisbogenabschnitts, insbesondere eines Halbkreises annimmt.

6. Bewegungssystem nach einem der vorhergehenden Ansprüche, mit einer dritten Bewegungseinheit, welche ein Verbringen des weiterhin von der Halteeinheit unmittelbar gehaltenen Werkstücks von der zweiten Position (C) entlang einer dritten Bewegungsbahn (CD) in eine von der zweiten Position abweichende vierte Position (D) bewirkt, in der die Verzahnungsbearbeitung erfolgt.

7. Bewegungssystem nach einem der vorhergehenden Ansprüche, mit einer Laufschiene (38), auf welcher die Halteeinheit während der Bewegung entlang der zweiten Bewegungsbahn rollt oder gleitet.

8. Bewegungssystem nach einem der Ansprüche 3 bis 7, bei dem die rotatorische Bewegungseinheit in einer 360°/n Taktung getaktet ist, wobei n bevorzugt 2, 3 oder 4 ist, insbesondere 2 ist.

9. Bewegungssystem nach einem der vorhergehenden Ansprüche, mit n ≥ 2, insbesondere gleichartig ausgebildeten Halteeinheiten (10; 10').

10. Bewegungssystem nach Anspruch 9, das durch seine Steuerung derart gesteuert ist, dass ein von einer Halteeinheit (10) gehaltenes Werkstück die dritte Position (B) und ein von einer anderen Halteeinheit (10') gehaltenes Werkstück die zweite Position (C) aufgrund der Wirkung der zweiten Bewegungseinheit gekoppelt und zeitgleich verlässt.

11. Bewegungssystem nach einem der vorhergehenden Ansprüche, bei dem die Halteeinheit(en) (10; 10') während der Bewegung auf der ersten und/oder dritten Bewegungsbahn bis auf eine nur abstützende Kopplung keine ein Lösen erforderliche Kopplung an die erste und/oder dritte Bewegungseinheit aufweist/aufweisen.

12. Bewegungssystem nach einem der Ansprüche 7 bis 12, mit einem Drehkäfig (20), dessen parallel zur Drehachse der zweiten Bewegungseinheit wirkende Stützstruktur wenigstens teilweise durch Führungsstangen (26) der Führungsanordnung (26, 16) gebildet ist.

13. Bewegungssystem nach einem der vorhergehenden Ansprüche, mit einem säulenartigen Träger (30), an dem die Bewegungseinheiten (10, 10') angeordnet sind und um den insbesondere der Drehkäfig (20) drehbar angeordnet ist.

14. Bewegungssystem nach einem der vorhergehenden Ansprüche, mit je einem Antrieb (36, 35, 36') pro Bewegungseinheit.

15. Bewegungssystem nach einem der vorhergehenden Ansprüche, bei dem die insbesondere alle Halteeinheit(en) zwei Haltearme (11) aufweisen, deren Abstand voneinander änderbar ist.

16. Bewegungssystem nach Anspruch 15, bei dem die Haltearme lösbar angebrachte Haltebacken (12) aufweisen, deren dem Werkstück zugewandte Seite insbesondere an die Werkstückkontur angepasst ist.

17. Bewegungssystem nach einem der vorhergehenden Ansprüche, mit einer insbesondere als Endloszuführer gestalteten Zu- und Abführeinrichtung (80), welche die Werkstücke insbesondere in einer Höhe ihres dem Boden zugewandten Endes zwischen 75 cm und 135 cm, bevorzugt zwischen 90 cm und 120 cm über Boden in die erste Position bringt.

18. Verzahnungsmaschine mit wenigstens einer Werkstückspindel (200) zur Aufnahme eines Werkstücks, und einem Werkstückbe- und -entladesystem,
**dadurch gekennzeichnet, dass** das Be- und Entladesystem ein Bewegungssystem (100) nach einem der vorhergehenden Ansprüche aufweist.

## Claims

1. A moving system (100) for transferring workpieces, which are provided for gear cutting on a workpiece spindle (200) and have a workpiece axis of rotation, from a first position (A), adopted while they are being fed, into a second position (C) that in all cases differs from the first position by a smaller distance between the workpiece axis of rotation and the workpiece spindle axis, wherein the moving system has a first movement unit (36, 32, 34) which transfers a workpiece from the first position (A) to a third position (B), different from the first and second position, along a first movement path (AB), and a second movement unit (35) which transfers the workpiece from the third position (B) to the second position (C) along a second movement path (BC), wherein the moving system is also designed to transfer machined workpieces back out of the second position (C) and to hold and move more than one workpiece at the same time,
**characterised in that**, while it is being moved on the first and second movement path, the workpiece is held by one and the same holding unit (10; 10') that directly holds the workpiece, without a movement caused by the second movement unit entailing a movement of the first movement unit, and **in that** the moving system comprises a guide arrangement (26, 16) which guides the holding unit during the movement along the first movement path and moves together with this movement along the second movement path.

2. The moving system in accordance with claim 1, wherein the first movement unit and/or the second movement unit have only one degree of freedom.

3. The moving system in accordance with claim 1 or 2, wherein the second movement unit is a rotary movement unit.

4. The moving system in accordance with one of the preceding claims, wherein the first movement unit is a linear movement unit, in particular for a vertical movement.

5. The moving system in accordance with one of the preceding claims, wherein the second movement path is curved and preferably takes the form of a circular arc section, in particular a semicircle.

6. The moving system in accordance with one of the preceding claims, comprising a third movement unit which causes the workpiece that is still held directly by the holding unit to be transferred from the second position (C) along a third movement path (CD) to a fourth position (D) that is different from the second position and in which the gear cutting takes place.

7. The moving system in accordance with one of the preceding claims, comprising a rail (38) on which the holding unit rolls or slides during the movement along the second movement path.

8. The moving system in accordance with one of claims 3 to 7, wherein the rotary movement unit is clocked in a 360°/n step, where n is preferably 2, 3 or 4, and in particular is 2.

9. The moving system in accordance with one of the preceding claims, comprising n ≥ 2 holding units (10; 10') which are in particular identically formed.

10. The moving system in accordance with claim 9, which is controlled by its control system in such a way that a workpiece held by a holding unit (10) leaves the third position (B) and a workpiece held by another holding unit (10') leaves the second position (C) in a coupled and simultaneous manner under the action of the second movement unit.

11. The moving system in accordance with one of the preceding claims, wherein, during the movement on the first and/or third movement path, the holding unit(s) (10; 10') has/have no coupling to the first and/or third movement unit that requires releasing, apart from a merely bracing coupling.

12. The moving system in accordance with one of claims 7 to 12, comprising a rotary cage (20), the support structure of which, acting parallel to the axis of rotation of the second movement unit, is formed at least in part by guide bars (26) of the guide arrangement (26, 16).

13. The moving system in accordance with one of the preceding claims, comprising a columnlike support (30) on which the movement units (10, 10') are arranged and around which the rotary cage (20) in particular is rotatably arranged.

14. The moving system in accordance with one of the preceding claims, comprising one drive (36, 35, 36') for each movement unit.

15. The moving system in accordance with one of the preceding claims, wherein the holding unit, and in particular every holding unit, has two holding arms (11), the distance between which can be altered.

16. The moving system in accordance with claim 15, wherein the holding arms have holding jaws (12) that are releasably attached, the face of which holding jaws that is facing the workpiece is in particular adapted to the workpiece contour.

17. The moving system in accordance with one of the preceding claims, comprising a feeding and removal device (80), which is designed in particular as a continuous feeder and which brings the workpieces into the first position, in particular at a height of between 75 cm and 135 cm above the ground, and preferably between 90 cm and 120 cm above the ground, as measured at the end of said device facing the ground.

18. A gear-cutting machine comprising at least one workpiece spindle (200) for receiving a workpiece, and a workpiece loading and unloading system,
**characterised in that** the loading and unloading system has a moving system (100) in accordance with one of the preceding claims.

## Revendications

1. Système de déplacement (100) destiné à transférer des pièces à usiner prévues sur une broche porte-pièce (200) en vue d'un usinage de dentures et présentant un axe de rotation de pièce à usiner, d'une première position (A) occupée lors de leur amenée à une deuxième position (C) qui diffère de la première position par le fait que la distance entre l'axe de rotation de la pièce à usiner et l'axe de la broche porte-pièce y est dans tous les cas inférieure, le système comportant une première unité de déplacement (36, 32, 34) occasionnant un transfert d'une pièce à usiner, de la première position (A) à une troisième position (B) différente de la première et de la deuxième position, le long d'une première trajectoire (AB), et une deuxième unité de déplacement (35) occasionnant un transfert de la pièce à usiner de la troisième position (B) à la deuxième position (C) le long d'une deuxième trajectoire (BC), ledit système de déplacement étant en outre conçu pour retransférer les pièces usinées hors de la deuxième position (C) et pour retenir et déplacer plus d'une pièce à usiner à la fois,
**caractérisé en ce que** la pièce à usiner est retenue, pendant son déplacement sur la première et sur la deuxième trajectoire, par une seule et même unité de retenue (10; 10') retenant directement ladite pièce à usiner, sans qu'un déplacement causé par la deuxième unité de déplacement entraîne un déplacement de la première unité de déplacement, et **en ce que** le système de déplacement présente un dispositif de guidage (26, 16) qui guide ladite unité de retenue pendant le déplacement le long de la première trajectoire et qui se déplace conjointement à ce déplacement le long de la deuxième trajectoire.

2. Système de déplacement selon la revendication 1, dans lequel la première unité de déplacement et/ou la deuxième unité de déplacement n'ont qu'un seul degré de liberté.

3. Système de déplacement selon la revendication 1 ou 2, dans lequel la deuxième unité de déplacement est une unité de déplacement giratoire.

4. Système de déplacement selon l'une des revendications précédentes, dans lequel la première unité de déplacement est une unité de déplacement linéaire, notamment pour un déplacement à la verticale.

5. Système de déplacement selon l'une des revendications précédentes, dans lequel la deuxième trajectoire est courbe et présente de préférence la forme d'une section d'arc de cercle, notamment d'un demi-cercle.

6. Système de déplacement selon l'une des revendications précédentes, comportant une troisième unité de déplacement occasionnant un transfert de la pièce à usiner toujours retenue directement par l'unité de retenue, le long d'une troisième trajectoire (CD), de la deuxième position (C) à une quatrième position (D) différente de la deuxième position, à laquelle s'effectue l'usinage de dentures.

7. Système de déplacement selon l'une des revendications précédentes, comportant une glissière (38) sur laquelle roule ou coulisse l'unité de retenue pendant le déplacement le long de la deuxième trajectoire.

8. Système de déplacement selon l'une des revendications 3 à 7, dans lequel l'unité de déplacement giratoire est cadencée selon une cadence de 360°/n, n valant de préférence 2, 3 ou 4, et valant notamment 2.

9. Système de déplacement selon l'une des revendications précédentes, comportant n ≥ 2 unités de retenue (10 ; 10') présentant notamment une conception identique.

10. Système de déplacement selon la revendication 9, lequel est commandé par son organe de commande de telle manière qu'une pièce à usiner retenue par une unité de retenue (10) quitte la troisième position (B) et qu'une pièce à usiner retenue par une autre unité de retenue (10') quitte la deuxième position (C), de manière couplée et simultanée, sous l'effet de la deuxième unité de déplacement.

11. Système de déplacement selon l'une des revendications précédentes, dans lequel la ou les unités de retenue (10 ; 10') ne présentent, pendant le déplacement sur la première et/ou la troisième trajectoire, mis à part un couplage servant uniquement d'appui, aucun couplage nécessitant un détachement vis-à-vis de la première et/ou de la troisième unité de déplacement.

12. Système de déplacement selon l'une des revendications 7 à 12, comportant une cage rotative (20) dont la structure de support agissant parallèlement à l'axe de rotation de la deuxième unité de déplacement est formée au moins partiellement par des barres de guidage (26) du dispositif de guidage (26, 16).

13. Système de déplacement selon l'une des revendications précédentes, comportant un montant en forme de colonne (30) sur lequel les unités de déplacement (10, 10') sont agencées et autour duquel la cage rotative (20), notamment, est agencée rotative.

14. Système de déplacement selon l'une des revendications précédentes, comportant un dispositif d'entraînement (36, 35, 36') par unité de déplacement.

15. Système de déplacement selon l'une des revendications précédentes, dans lequel l'unité de retenue, et notamment toutes les unités de retenue, présentent deux bras de retenue (11) dont l'écartement est modifiable.

16. Système de déplacement selon la revendication 15, dans lequel les bras de retenue présentent des mâchoires de retenue (12) montées amovibles dont la face tournée vers la pièce à usiner est adaptée notamment au contour de la pièce à usiner.

17. Système de déplacement selon l'une des revendications précédentes, comportant un dispositif d'amenée et de retrait (80) notamment conçu à la manière d'un organe d'amenée sans fin qui apporte les pièces à usiner à la première position notamment à une hauteur située entre 75 cm et 135 cm, de préférence entre 90 cm et 120 cm au-dessus du sol, mesurée à leur extrémité tournée vers le sol.

18. Machine à tailler les engrenages, comportant au moins une broche porte-pièce (200) destinée à recevoir une pièce à usiner, et un système de chargement/déchargement de pièce à usiner,
**caractérisée en ce que** le système de chargement/déchargement présente un système de déplacement (100) selon l'une des revendications précédentes.
